# EUROPEAN PATENT APPLICATION

(11) **EP 3 722 624 A1**
(43) Date of publication of application: **14.10.2020**
(21) Application number: 20160958.3
(22) Date of filing: 04.03.2020
(51) Int. Cl.: F16B 37/08, E04B 1/41

(54) **CAST-IN PLACE ANCHOR SYSTEM WITH MULTI-USE ANCHOR HOUSING WITH JAWS AND REMOVABLE NOSE-PIECE**

(30) Priority: 12.04.2019 US 201962833029 P; 19.02.2020 US 202016794332
(71) Applicant: Black & Decker Inc., New Britain, CT 06053 (US)
(72) Inventor: SEROKOSZ, Mark J., New Fairfield, Connecticut 06810 (US); CHRISTOPHERSEN, Kyle, Lutherville-Timonium, Maryland 21093 (US); DUNNING, Jack, White Plains, New York 10605 (US)
(74) Representative: SBD IPAdmin

(57) **Abstract**

An anchor system is disclosed for anchoring objects to a concrete structure after concrete setting. The assembly includes an anchor housing having a threaded opening, a metal decking anchor assembly and a wood form anchor assembly. The wood form and the metal decking anchor assemblies may accommodate the anchor housing and the anchor housing is used in one of the wood form anchor assembly and the metal decking anchor assembly. The metal decking anchor assembly includes a nose-piece and the anchor housing is selectively connectable to the nose-piece via a locking connection such as a bayonet connection.

## Description

### Field

This specification relates to a cast-in-place anchor assembly for suspending objects below a metal deck after concrete pouring and concrete setting.

### Background

The WoodKnocker® and Bang-It ® + products are cast-in-place anchor assemblies available for purchase and embodiments disclosed herein are conceived to improve upon this product. In the recent past Applicant has filed patent applications with subject matter generally related to the present application. U.S. Patent Application No. 16/002,099, filed June 7, 2018, and entitled Cast-In Place Anchor Assembly covers a cast-in place anchor the disclosure of which is incorporated herein by reference in its entirety. In addition, U.S. Patent Application No. 15/923,052, filed on March 16, 2018, and entitled Snap Nut Concrete Anchor Assembly also covers a cast-in-place-anchor the disclosure of which is incorporated herein by reference. Furthermore, U.S. Patent Application No. 15/948,131, filed on April 9, 2018, and entitled Snap Nut Concrete Anchor Assembly also covers a cast-in-place-anchor the disclosure of which is incorporated herein by reference.

There are at least two conventional types of cast-in-place anchors. A first type secures a cast-in-place anchor in position adjacent to a wooden concrete forming boundary and a second type secures a cast-in-place anchor in position adjacent to metal decking. After concrete pouring and setting each type of cast-in-place anchor provides an anchoring point to which an object (e.g., a threaded rod) can be anchored. Both types of anchor include a jaw assembly arranged in an anchor housing. Load applied to the threaded rod is transferred to threaded jaws of the jaw assembly which in turn transfer load to the anchor housing. The anchor housing includes a flange which is ultimately embedder in the cured concrete and which transfers load from the anchor housing to the cured concrete. It would be beneficial to develop an anchor system in which a single anchor housing may be usable in both of the two types of cast-in-place previously discussed and a user may choose to use that single anchor housing in one or the other of the types to form a cast-in-place anchor. Such a dual use anchor housing would save money by preventing a supplier from having to make different anchor housing designs for each type of cast-in-place anchor.

In conventional cast-in-place anchors for providing an anchoring point adjacent to metal decking, a nose-piece of the anchor is inserted through an opening in the metal decking. When the metal decking is a support in a multi-story building for a new floor slab, after setting, the nose-piece extends below the decking. That means access can be gained to the nose-piece from the floor below. From the floor below, an anchor member (e.g., a threaded rod) may be inserted through the nose-piece and further into the anchor housing to the jaw assembly. The jaw assembly engages the anchor member to secure the anchor member to the anchor and to the slab. In a seismic event, the slab may be thrust up and down which could reverse the normal downward intended gravity load into an upward load. In this reverse load mode and in some cast-in-place designs, the jaw assembly may move upward under that reverse upward load and then down again. Also, if the jaw assembly design is one of a split nut design, the dynamic movement of the jaws relative to the anchor housing could cause the threaded jaws to separate and lose hold of the threaded rod. One solution to preventing the jaws from moving upward relative to the anchor housing is to include a washer and a nut on the threaded rod so that the washer is adjacent the lower surface of the metal decking and the nut is threaded on the rod adjacent to the washer. Therefore, any upward load from the threaded rod gets transferred to the nut then to the washer and then to the metal decking and cured concrete slab. To be able to install the washer, it would be beneficial to have a removeable nose-piece as a conventional nose-piece would occupy at least a portion of the space where the washer and nut would be installed.

### Summary

According to an aspect of the present invention there is provided a cast-in-place anchor assembly for anchoring objects to a concrete structure after concrete setting. The anchor assembly includes an anchor housing. The anchor housing includes an opening therein along a longitudinal axis thereof for receiving an elongate load bearing member or anchor member. The anchor housing also includes a jaw assembly for lockingly engaging and axially securing or restricting the anchor member relative to the anchor housing. Furthermore, the assembly includes an anchor body. The anchor body includes a bias member, a plate, and a nose-piece. The nose-piece includes an anchor connector for connecting to a nose connector of the anchor housing.

### Brief Description of the Drawings

Embodiments will now be described by way of non-limiting example with reference to the accompanying drawings in which:
Fig. 1 is a side view of a metal decking anchor assembly of an anchor system;
Fig. 1B is an exploded top perspective view of the metal decking anchor of Figure 1.
Figs. 2A is a side cross-sectional view of a wood form anchor assembly of the anchor system in a pre-install configuration;
Fig. 2B is a side cross-sectional view of a wood form anchor assembly of the anchor system in a post-install configuration.
Fig. 2C is an exploded top perspective view of the wood form anchor assembly of anchor system;
Fig. 3A1 discloses a bottom perspective view of an anchor housing for use with either of the anchor assemblies of Figs. 1A, 1B or Figs. 2A, 2B, 2c.

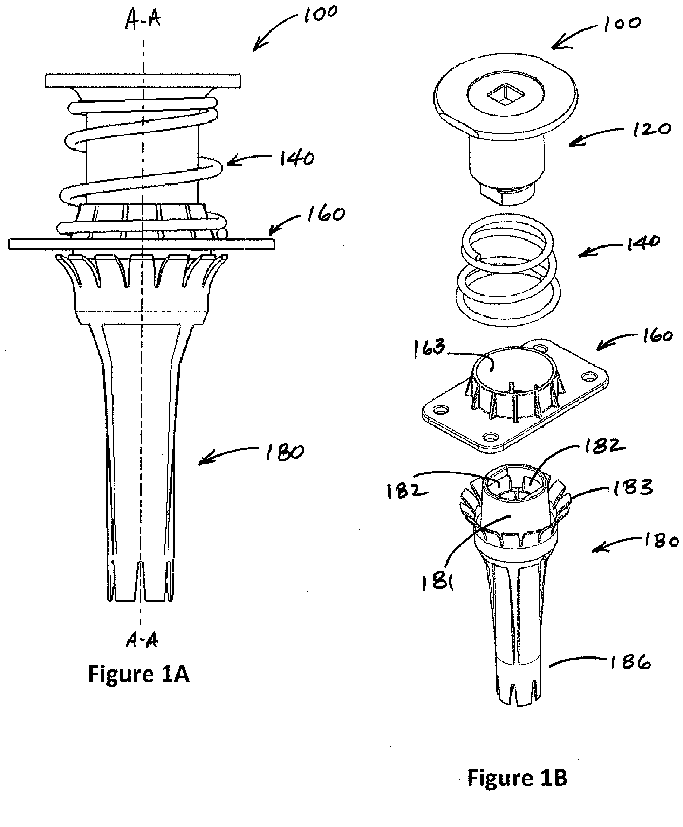

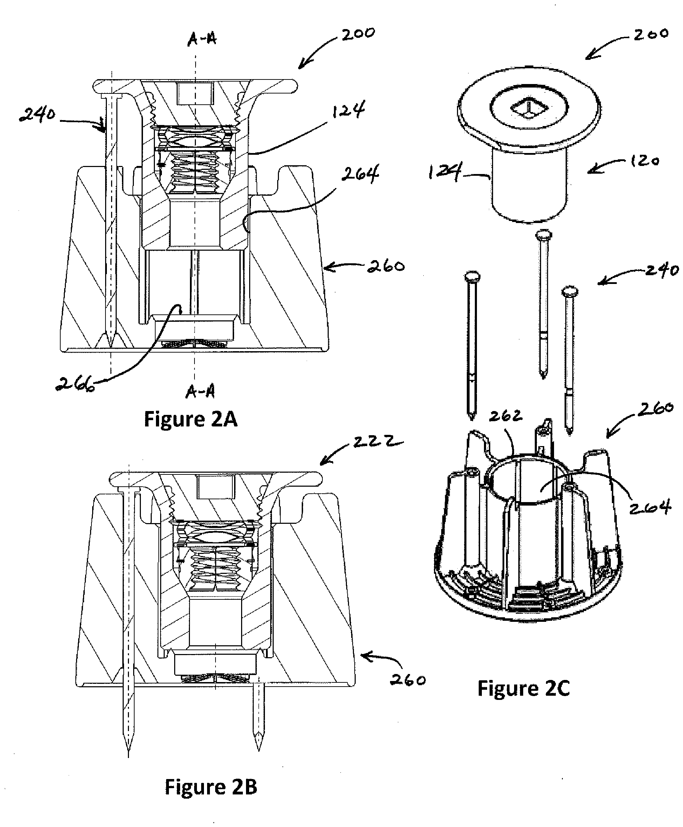

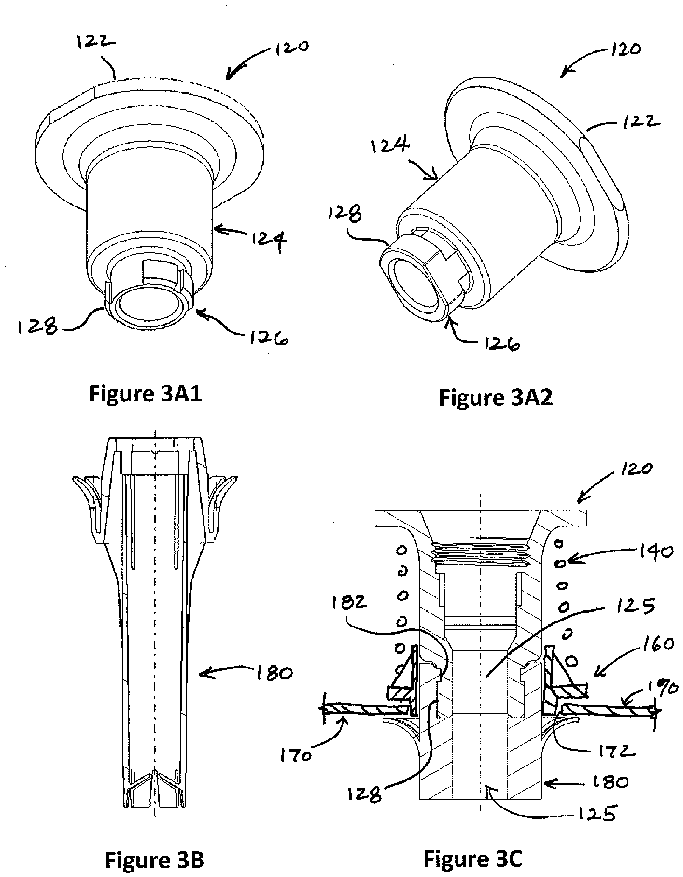

Fig. 3A2 discloses a side perspective view of an anchor housing for use with either of the anchor assemblies of Figs. 1A, 1B or Figs. 2A, 2B, 2c of the anchor system.
Fig. 3B shows a cross-sectional view of a nose piece of the anchor assembly of Fig. 1
Fig. 3C shows a cross-sectional view of a connection between the anchor housing and the nose-piece of the anchor assembly of Figure 1.

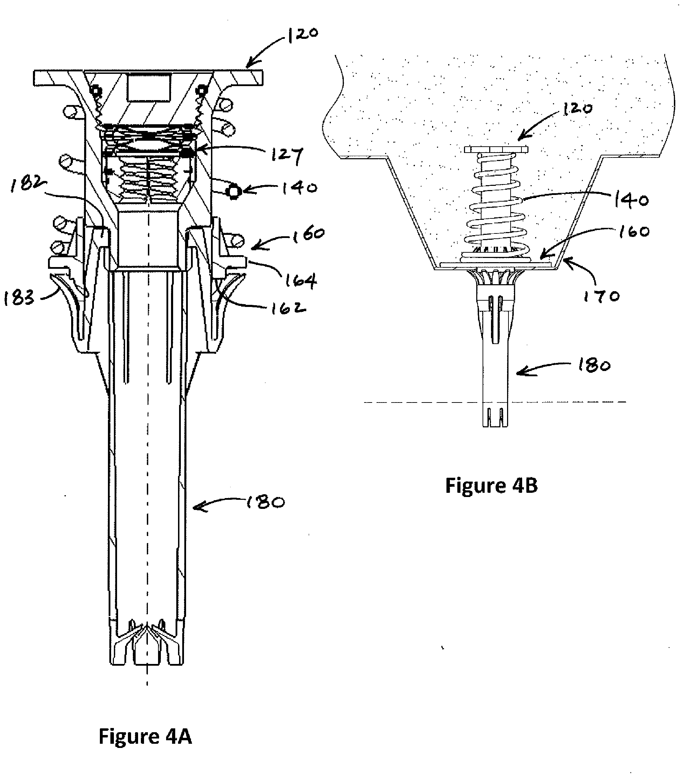

Fig. 4A shows a cross sectional view of the anchor assembly of Fig. 1.
Fig. 4B shows a side view of the anchor assembly as shown in Fig. 1 in an installed configuration.

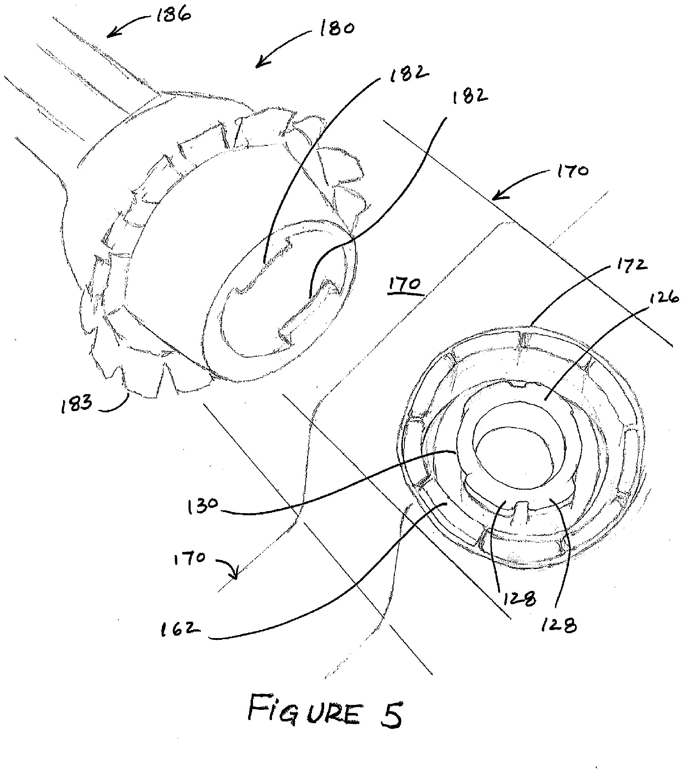

Fig. 5 shows a bottom perspective view of an installed anchor assembly of Fig. 1 with the nose-piece removed.

### Detailed Description

Figs. 1A and 1B show a cast-in-place metal deck anchor assembly **100** for suspending objects below a metal deck after concrete is poured onto the metal deck. Metal decking anchor assembly **100** includes an anchor housing **120,** a spring **140,** a plate **160** and a nose-piece **180.** Figs. 2A, 2B and 2C show a cast-in-place wood form anchor assembly **200** for anchoring objects to a concrete structure after concrete pouring. Wood form anchor assembly **200** includes an anchor housing **220** (which in some cases is identical and interchangeable with anchor housing **220** of assembly **100**), wood fastening members **240** (e.g., nails), and a base housing **260.**

As shown in Figs. 3A1, 3A2, 3B, and 3C, anchor housing **120** has a head portion **122** and a shank portion **124** and may be made of metal or other suitable material. Shank portion **124** further includes a nose connector **126** at an end opposite the flange or head portion **122.** Nose connector **126** may include a locking structure **128** comprised of projections and/or recesses. Anchor assembly **120** also has a central longitudinal passage along a central axis A-A. Shank portion **124** may house a jaw assembly **127** (see Fig. 4A). Jaw assembly **127** may comprise a fixed threaded bore or may include a threaded bore formed from biased internally threaded split nuts. The central longitudinal passage passes through jaw assembly **127.**

Nose-piece **180** of metal decking assembly **100** may be elongate and may include a central passage along axis A-A. An upper or first end **181** of nose-piece **180** includes an anchor connector **182** for connecting nose-piece **180** with anchor housing **120.** Specifically, anchor connector **182** engages nose connector **126** to secure anchor housing **120** to nose-piece **180.** Anchor connector **182** and nose-connector **126** may include projections and recesses that support a bayonet connection therebetween. Such a bayonet connection allows anchor housing **120** to be fit axially together with nose-piece **180** and then rotated into a position such that the two pieces are relatively locked together. Removal of the nose-piece from the anchor housing may include a reverse process of rotating nose-piece **180** relative to anchor housing **120** and then axially separating the pieces. As an alternative to a bayonet connection, nose connector **126** and anchor connector **182** may be a simple threaded or friction connection. The friction connection may rely on complementary tapered surface that securely engage each other via relative axial and/or torsional forces applied to anchor housing **120** and nose-piece **180.** Nose-piece **180** also includes flexible stoppers **183.** Flexible stoppers **183** extend radially outward so as to extend to or form a radius that is greater than the radius of the opening in the metal decking into which assembly **100** is to be installed.

Plate **160** may be a flat member with a central opening **163.** When fully assembled, central opening **163** is disposed around an outer wall of shank portion **124** of anchor housing **120.** Plate **160** is positioned between flexible stoppers **183** of nose-piece **180** and head **122** of anchor housing **120.** Opening **162** may be slightly larger than an outer wall of shank portion **124** so that plate **160** is free to move axially between head **122** and flexible stoppers **183.** A spring or bias member **140** is disposed between a top surface of plate **160** and a bottom surface of flange or head **122.** Specifically, plate **160** may move axially along shank portion **124** against the bias force of spring **140** which urges plate **160** downward toward flexible stoppers **183.** Before installation on the metal decking, either the upper end **181** of nose-piece or the flexible stoppers **183** prevent further downward movement of plate **160** caused by the urging of spring **140.**

In use, a lead end **186** of nose-piece **180** is inserted into the metal decking installation opening 172 (see Fig 3C) until a lower surface of flexible stoppers **183** engage the hole. Anchor assembly **100** is then urged further through opening **172** of metal decking **170,** overcoming the natural bias force of flexible stoppers **180** which flex radially inward. Flexible stoppers **183** flex inward until their outer radius is smaller than opening **172,** they pass through opening **172,** and they flex back outward to a radius larger than opening **172.** Thereafter, flexible stoppers **183** prevent nose-piece **180** which is connected to anchor housing **120** from passing backward through opening **172.** While flexible stoppers **183** are being urged axially through opening **172,** plate **160** moves axially along shank portion **124** against a bias force of spring **140** to accommodate the axially movement of assembly **100** through opening **172.** The biasing and reactionary biasing forces of spring **140** on the top surface of plate **160** and flexible stoppers **183** on the bottom surface of plate **160** respectively secure anchor assembly **100** to metal deck **170** as shown in Figs 1A, 3C, and 4B.

Fig. 3C specifically shows the connection between anchor housing **120** and nose piece **180.** After installation into metal decking **170,** an anchor member may be inserted into central passage **125** until it is axially secured within jaw assembly **127.**

As mentioned above, a cast-in-place wood form assembly **200** is also disclosed herein. Assembly **200** includes an anchor housing **120** similar or the same as the anchor housing described for use with the assembly **100.** Assembly **200** also includes a base housing **260** and at least one wood form fastener **240** (e.g., a nail). Base housing **260** includes an anchor space **264** defined by a wall **262** for accommodating anchor housing **120** axially inserted into space **264.** Anchor space **264** may accommodate anchor housing **120** in a friction or interference fit. Base housing **260** includes a lower engagement surface **266** which may be contacted by a lower portion of anchor housing **120** when anchor assembly **200** is fit together with anchor housing **120** in the set position. Base housing **264** includes at least one passage for axially accommodating wood form fastener(s) **240.** Flange **222** of anchor housing **120** extends out radially past the radial position of the wood fastener passages so that a bottom surface of flange **222** engages heads of the wood fasteners when anchor assembly **120** is forced axially into anchor space **264.**

Assembly **200** is shown in Fig. 2A in a pre-set configuration and is shown in Fig. 2B in a set configuration. Engagement surface **266** may take the form of a rim. The rim may taper to minimize surface area contact with anchor housing **120** to increase pressure at the engagement interfaces. The higher pressure between engagement surface **266** and anchor housing **120** limits, minimizes, and/or discourages ingress of concrete or concrete biproducts into the central longitudinal passage and jaw assembly **127.** The entire base housing **260** or engagement surface **266** may be made of a flexible material so as to better form a seal between anchor housing **120** and engagement surface **266.**

Figure 5 shows a bottom view of a metal decking anchor assembly **100** installed in metal decking **170** with nose-piece **180** removed and laying on the side after installation. As shown in Fig. 5, removal of nose-piece **180** exposes a lower portion of nose connector **126** which is visible through opening **172** in metal decking **170.** Projections **128** and voids **130** of nose connector **126** are disengaged from projections **182** of nose-piece **180.** The now exposed nose-connector **126** is surrounded by a plate ring **162** which forms the lower part plate **160** and which helps position plate **161.** A cast-in-place anchor assembly for anchoring objects to a concrete structure after concrete pouring and concrete setting, the objects fastened to an elongated load bearing member which is connected to the anchor assembly, the cast-in-place anchor assembly comprising:
an anchor housing, the anchor housing including an opening therein along a longitudinal axis thereof for receiving the elongate load bearing member, the anchor housing also including a jaw assembly housed in the anchor assembly, the jaw assembly for lockingly engaging and axially constraining the elongate load bearing member relative to the anchor housing,
the jaw assembly including separable jaws and the jaws including a lock structure, a bias member for biasing the jaws toward each other and a locking member for restricting movement of the jaws relative to the anchor housing. 0 relative to opening 172 before concrete curing.

It will be appreciated that whilst various aspects and embodiments have heretofore been described, the scope of the present invention is not limited thereto and instead extends to encompass all arrangements, and modifications and alterations thereto, which fall within the scope of the appended claims.

## Claims

1. A cast-in-place anchor system for anchoring objects to a concrete structure after concrete pouring and concrete setting, the objects fastened to an elongated load bearing member which is connected to an anchor member of the cast-in-place anchor system, the cast-in-place anchor system comprising:
an anchor housing, the anchor housing including an opening therein along a longitudinal axis thereof for receiving the elongate load bearing member, the anchor housing also including a jaw assembly for lockingly engaging and axially securing the elongate load bearing member relative to the anchor housing,
a wood anchor assembly including a base housing and at least one elongate wood fastener, the base housing including a receptacle for receiving and supporting the anchor housing, the base housing further including an opening for receiving the load bearing member, the receptacle and the opening generally aligned along the longitudinal axis,
a metal anchor assembly including a bias member, a plate, and a nose-piece, the nose-piece including an anchor connector for connecting to a nose connector of the anchor housing,
wherein, the anchor housing is connected to the wood anchor assembly or the metal anchor assembly.

2. The cast-in-place anchor system of claim 1, wherein the nose-piece further includes an opening for receiving the elongate load bearing member, the nose connector and the opening generally aligned along the longitudinal axis.

3. The cast-in-place anchor system of claim 1, wherein the anchor connector and the nose connector engage with each other as a bayonet connection.

4. The cast-in-place anchor system of claim 1, wherein the anchor connector and the nose connector engage with each other as a threaded connection.

5. The cast-in-place anchor system of claim 1, wherein the anchor connector includes nose projections and the nose connector includes anchor projections and wherein the anchor projections and nose projections engage each other to connect the nose-piece to the anchor housing and the nose-piece is selectively removeable from the anchor housing.

6. The cast-in-place anchor system of claim 5, wherein the selective removal is by twisting and axial movement of the nose-piece.

7. The cast-in-place anchor system of claim 1, wherein the jaw assembly includes threads for the locking engaging and axially securing of the elongate load bearing member.

8. The cast-in-place anchor system of claim 1, wherein the anchor housing is lockably connected to the base housing.

9. The cast-in-place anchor system of claim 8, wherein the lockable connection includes a friction fit between the base housing and the anchor.

10. A cast-in-place anchor assembly for anchoring objects to a concrete structure after concrete pouring and concrete setting, the objects fastened to an elongated load bearing member which is connected to the anchor assembly, the cast-in-place anchor assembly comprising:
an anchor housing, the anchor housing including an opening therein along a longitudinal axis thereof for receiving the elongate load bearing member, the anchor housing also including a jaw assembly for lockingly engaging and axially securing the elongate load bearing member relative to the anchor housing,
an anchor body including a bias member, a plate, and a nose-piece, the nose-piece including an anchor connector for connecting to a nose connector of the anchor housing,

11. The cast-in-place anchor system of claim 10, wherein the anchor connector and the nose connector engage with each other as a bayonet connection.

12. The cast-in-place anchor system of claim 10, wherein the anchor connector and the nose connector engage with each other as a threaded connection.

13. The cast-in-place anchor system of claim 10, wherein the anchor connector includes nose projections and the nose connector includes anchor projections and wherein the anchor projections and nose projections engage each other to connect the nose-piece to the anchor housing and the nose-piece is selectively removeable from the anchor housing.

14. The cast-in-place anchor system of claim 13, wherein the selective removal is by friction fit.

15. The cast-in-place anchor system of claim 13, wherein the anchor body further including a bias member.
